# EUROPEAN PATENT APPLICATION

(11) **EP 4 451 119 A1**
(43) Date of publication of application: **23.10.2024**
(21) Application number: 22918467.6
(22) Date of filing: 28.12.2022
(51) Int. Cl.: G06F 9/451

(54) **RESOURCE PROCESSING METHOD AND APPARATUS, AND ELECTRONIC DEVICE, STORAGE MEDIUM AND PROGRAM PRODUCT**

(30) Priority: 06.01.2022 CN 202210010956
(71) Applicant: Beijing Zitiao Network Technology Co., Ltd., Beijing 100190 (CN)
(72) Inventor: ZHANG, Tiantian, Beijing 100086 (CN); FANG, Mengying, Beijing 100086 (CN)
(74) Representative: Dentons UK and Middle East LLP
(86) International application number: PCT/CN2022/142823
(87) International publication number: WO 2023/131026

(57) **Abstract**

The present disclosure relates to a resource processing method and apparatus, and an electronic device, a storage medium and a program product, which can enrich the ways of gaining access to a live streaming viewing permission, thereby improving the user experience. The method comprises: displaying a resource transfer page for a target resource, wherein information of the target resource and information of a live streaming room corresponding to the information of the target resource are displayed on the resource transfer page; and in response to a resource transfer operation for the target resource, displaying information of successful resource transfer, so as to share the target resource, wherein the target resource is used by a target resource claiming object to gain corresponding access to the live streaming room when same has drawn the target resource.

## Description

The present application is based on CN application No. 202210010956.4, filed on January 6, 2022, and asserts its priority. The disclosure of the CN application is incorporated herein into the present application as a whole.

### TECHNICAL FIELD

The present disclosure relates to the technical field of live streaming, and in particular, to a resource processing method and apparatus, an electronic device, a storage medium and a program product.

### BACKGROUND

Under the wave of the Internet, the continuous development and evolution of hardware and software technology has promoted the emergence of smart devices and software. At the same time, live streaming service technology continues to mature and can be embedded into different application platforms. Users can watch news, sports events, shopping recommendations and other programs online through online live streaming.

### SUMMARY

The present disclosure provides a resource processing method and apparatus, an electronic device, a storage medium and a program product.

In a first aspect of an embodiment of the present disclosure, provided is a resource processing method, including: displaying a resource transfer page of target resource, information of the target resource and information of a live streaming room corresponding to the information of the target resource being displayed on the resource transfer page; and in response to a resource transfer operation on the target resource, displaying resource transfer success information to share the target resource, the target resource being used to acquire respective permissions for the live streaming room in response to a target resource collecting object collected the target resource.

In a second aspect of an embodiment of the present disclosure, provided is a resource processing method, including: displaying a collecting identification of target resource on a second page; and
in response to a trigger operation on the collecting identification, displaying collecting success prompt information, so as to acquire, based on the target resource, respective permissions for a live streaming room corresponding to the target resource;
where the second page includes at least one of the following: a live streaming room page of the live streaming room, a resource transfer page of the target resource, a live streaming preview page of the live streaming room, and a search page for searching the live streaming room.

In a third aspect of an embodiment of the present disclosure, provided is a resource processing method, including: receiving a target resource collecting instruction sent by a target resource collecting object; and
allocating target resource to the target resource collecting object based on the target resource collecting instruction, so that the target resource collecting object acquires, based on the target resource, respective permissions for a live streaming room corresponding to the target resource.

In a fourth aspect of an embodiment of the present disclosure, provided is a resource processing apparatus, including: a display module, the display module being used to display a resource transfer page of target resource, information of the target resource and information of a live streaming room corresponding to the information of the target resource being displayed on the resource transfer page; and in response to a resource transfer operation on the target resource, display resource transfer success information to share the target resource, the target resource being used to acquire respective permissions for the live streaming room in response to a target resource collecting object collected the target resource.

In a fifth aspect of an embodiment of the present disclosure, provided is a resource processing apparatus, including: a display module, the display module being used to display a collecting identification of target resource on a second page; and in response to a trigger operation on the collecting identification, display collecting success prompt information, so as to acquire, based on the target resource, respective permissions for a live streaming room corresponding to the target resource; where the second page includes at least one of the following: a live streaming room page of the live streaming room, a resource transfer page of the target resource, a live streaming preview page of the live streaming room, and a search page for searching the live streaming room.

In a sixth aspect of an embodiment of the present disclosure, provided is a resource processing apparatus, including: a receiving module and an allocation module; the receiving module being used to receive a target resource collecting instruction sent by a target resource collecting object; the allocation module being used to allocate target resource to the target resource collecting object based on the target resource collecting instruction received by the receiving module, so that the target resource collecting object acquires, based on the target resource, respective permissions for a live streaming room corresponding to the target resource.

In a seventh aspect of an embodiment of the present disclosure, provided is an electronic device, including: a processor, a memory, and a computer program stored in the memory and executable on the processor, the computer program, when executed by the processor, implementing the resource processing method as described in the first aspect, the second aspect, or the third aspect.

In an eighth aspect of an embodiment of the present disclosure, provided is a computer-readable storage medium, a computer program being stored on the computer-readable storage medium, the computer program, when executed by a processor, implementing the resource processing method as described in the first aspect, the second aspect, or the third aspect.

In a fifth aspect of an embodiment of the present disclosure, provided is a computer program product, where the computer program product includes a computer program, and the computer program product, when running on a processor, causes the processor to execute the computer program, so as to implement the resource processing method as described in the first aspect, the second aspect, or the third aspect.

In a sixth aspect of an embodiment of the present disclosure, provided is a chip including a processor and a communication interface, the communication interface being coupled to the processor, the processor being used to run program instructions to implement the resource processing method as described in the first aspect, the second aspect, or the third aspect.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.

In order to more clearly illustrate the embodiments of the present disclosure or the technical solutions in related art, the accompanying drawings needed to be used in the description of the embodiments or related art will be briefly introduced below. Obviously, for those of ordinary skill in the art, other accompanying drawings can also be obtained based on these accompanying drawings without exerting creative labor.
Fig. 1 is a schematic structural diagram of a target resource processing system provided in an embodiment of the present disclosure;
Fig. 2 is a first schematic flow diagram of the resource processing method provided in an embodiment of the present disclosure;
Fig. 3 is a first schematic interface diagram of the resource processing method provided in an embodiment of the present disclosure;
Fig. 4 is a second schematic interface diagram of the resource processing method provided in an embodiment of the present disclosure;
Fig. 5 is a third schematic interface diagram of the resource processing method provided in an embodiment of the present disclosure;
Fig. 6 is a fourth schematic interface diagram of the resource processing method provided in an embodiment of the present disclosure;
Fig. 7 is a second schematic flow diagram of the resource processing method provided in an embodiment of the present disclosure;
Fig. 8 is a fifth schematic interface diagram of the resource processing method provided in an embodiment of the present disclosure;
Fig. 9 is a sixth schematic interface diagram of the resource processing method provided in an embodiment of the present disclosure;
Fig. 10 is a third schematic flow diagram of the resource processing method provided in an embodiment of the present disclosure;
Fig. 11 is a first structural block diagram of a resource processing apparatus provided in an embodiment of the present disclosure;
Fig. 12 is a second structural block diagram of the resource processing apparatus provided in an embodiment of the present disclosure; and
Fig. 13 is a structural block diagram of an electronic device provided in an embodiment of the present disclosure.

### DETAILED DESCRIPTION

In order to understand the above objects, features and advantages of the present disclosure more clearly, the solutions of the present disclosure will be further described below. It should be noted that, as long as there is no conflict, the embodiments of the present disclosure and the features in the embodiments can be combined with each other.

Many specific details are set forth in the following description to fully understand the present disclosure, but the present disclosure can also be implemented in other ways different from those described here. Obviously, the embodiments in the description are only part of the embodiments of the present disclosure, and not all of the embodiments.

The terms "first", "second", etc. in the description and claims of the present disclosure are used to distinguish similar objects and are not used to describe a specific order or sequence. It is to be understood that figures so used are interchangeable under appropriate circumstances, so that embodiments of the present disclosure can be implemented in sequences other than those illustrated or described herein. Moreover, objects distinguished by "first", "second", etc. are usually of one type, and the number of objects is not limited. For example, a first object can be one or multiple. In addition, "and/or" in the description and claims indicates at least one of the connected objects, and the character "/" generally indicates that the associated objects are in an "or" relationship.

Under the wave of the Internet, the continuous development and evolution of hardware and software technology has promoted the emergence of smart devices and software. At the same time, live streaming service technology continues to mature and can be embedded into different application platforms. Users can watch news, sports events, shopping recommendations and other programs online through online live streaming.

In scenarios where live streaming watching permissions are required to watch a live streaming, the existing methods for acquiring live streaming watching permissions are too simple, and cannot meet user needs, resulting in affecting the user experience.

In order to solve the above technical problems or at least partially solve the above technical problems, the present disclosure provides a resource processing method and apparatus, an electronic device, a storage medium and a program product.

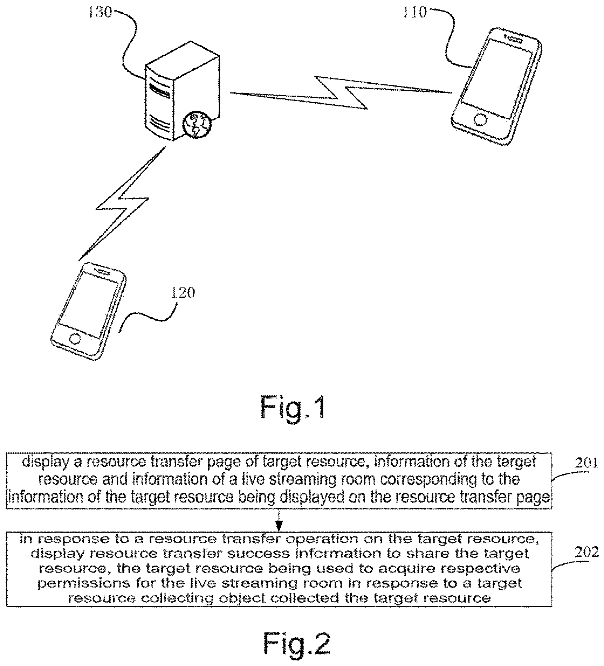

First, Fig. 1 shows a target resource processing system illustrated in an embodiment of the present disclosure. As shown in Fig. 1, the target resource processing system includes: at least one target resource sharing object 110 (only one target resource sharing object is shown as an example in the figure), at least one target resource collecting object 120 (only one target resource collecting object is shown as an example in the figure), and a target resource allocation platform 130. The target resource processing system can also include a target resource transfer platform and a booster ticket sharing platform, and the target resource allocation platform and the target resource transfer platform can be set independently or integrated. The following is an illustrative example of the integrated setup of the target resource allocation platform and the target resource transfer platform (collectively referred to as a target resource processing platform).

In the embodiments of the present disclosure, the target resource sharing object or the target resource collecting object may be a mobile electronic device or a non-mobile electronic device. Mobile electronic devices may be mobile phones, tablets, laptops, PDAs, vehicle-mounted electronic devices, wearable devices, ultra-mobile personal computers (UMPCs), netbooks or personal digital assistants (PDAs) etc.; and non-mobile electronic devices may be personal computers (PCs), televisions (TVs), etc., which the embodiments of the present disclosure do not specifically limit.

The resource processing method provided in an embodiment of the present disclosure will be illustrated in detail below in conjunction with the accompanying drawings by means of specific embodiments and application scenarios thereof.

As shown in Fig. 2, an embodiment of the present disclosure provides a resource processing method, which is applied to a target resource sharing object. The target resource sharing object may be the above electronic device, or may be a functional module and/or functional entity in the above electronic device that can implement the resource processing method. The details can be determined according to the actual situation, and are not limited in the embodiments of the present disclosure. The method may include the following steps 201 to 202.

201. Display a resource transfer page of target resource, information of the target resource and information of a live streaming room corresponding to the information of the target resource being displayed on the resource transfer page.

202. In response to a resource transfer operation on the target resource, display resource transfer success information to share the target resource, the target resource being used to acquire respective permissions for the live streaming room in response to a target resource collecting object collected the target resource.

The information of the live streaming room at least includes the following information: live streaming time information of the live streaming room, and identification information of the live streaming room. The information of the live streaming room may also include transfer information of the target resource of the live streaming room, transferable period information of the target resource of the live streaming room, etc., which is not limited in the embodiments of the present disclosure. The identification information of the live streaming room may include name information of the live streaming room, poster information of the live streaming room, etc., which is not limited in the embodiments of the present disclosure.

The target resource may correspond to watching permissions of the live streaming room, and may also correspond to an operation permission for the live streaming room, and may also correspond to other permissions for the live streaming room, which is not limited in the embodiments of the present disclosure.

The information of the target resource may be type information of the target resource, or quantity information of the target resource, transfer value information of the target resource, and description information (such as transfer rule information and usage rule information) of the target resource.

The target resource collecting object may be any object that collects the target resource, or may be a specified type of object that collects the target resource, which is not limited in the embodiments of the present application.

In an embodiment of the present disclosure, by displaying a resource transfer page of target resource, information of the target resource and information of a live streaming room corresponding to the information of the target resource being displayed on the resource transfer page; and in response to a resource transfer operation on the target resource, displaying resource transfer success information to share the target resource, the target resource being used to acquire respective permissions for the live streaming room in response to a target resource collecting object collected the target resource, the target resource collecting object can acquire, in a target resource sharing manner, respective permissions for the live streaming room by collecting the target resource in this solution, so that the ways of acquiring respective permissions for a live streaming room are enriched, thereby improving the user experience and increasing the amount of transfer of respective permissions for a live streaming room. Moreover, the ways of interaction between viewers and streamers are enriched, and viewers can support their favorite streamers by purchasing booster tickets and sharing booster tickets to other viewers for other viewers to collect, thereby improving the interactive experience.

Optionally, the information of the target resource includes a resource type indicated by a first tag and a resource type indicated by a second tag; the resource transfer operation includes an operation of selecting a target resource type, the target resource type being the resource type indicated by the first tag or the resource type indicated by the second tag; and the type of the target resource collecting object is an object type indicated by the target resource type.

It can be understood that the information of the target resource includes a resource type indicated by a first tag and a resource type indicated by a second tag, that is, the information of the target resource includes type information of the target resource. The resource transfer operation includes an operation of selecting a target resource type, that is, the resource transfer operation includes an operation of selecting a target resource type and an operation of determining a target resource transfer. The target resource type is a resource type indicated by a first tag or a resource type indicated by a second tag, that is, if the operation of selecting the target resource type is the operation of selecting the first tag, the target resource type is the resource type indicated by the first tag; and if the operation of selecting the target resource type is the operation of selecting the second tag, the target resource type is the resource type indicated by the second tag. The type of the target resource collecting object is an object type indicated by the target resource type, that is, only the target resource collecting object belonging to the object type indicated by the target resource type can collect the target resource, and acquire, after collecting the target resource, respective permissions for the live streaming room.

In an embodiment of the present disclosure, by means of the operation of selecting a target resource type, the target resource can be shared to an object belonging to the object type indicated by the target resource type such that the target resource can be shared to an object of a specified object type as required, thereby improving the user experience.

Optionally, after the above step 202, the resource processing method provided in an embodiment of the present disclosure may further include the following step 203.

203. Display collecting progress information of the target resource on a first page.

The first page includes any of the following: a live streaming room page of the live streaming room, a transfer detail page of the target resource, a live streaming preview page of the live streaming room, a collecting detail page of the target resource, and a sharing success notification message page of the target resource.

The collecting progress information at least includes: the number of target resource that have been collected, and the number of remaining target resource that have not been collected. The collecting progress information may also include a collecting time limit of target resource (e.g., a valid time range within which target resource can be collected), information of the live streaming room, etc., which is not limited in the embodiments of the present disclosure.

In an embodiment of the present disclosure, by displaying collecting progress information of the target resource on the first page, a user who shares the target resource can determine the collecting status of the shared target resource according to the collecting progress, which can improve the user experience and enhance the user's sense of achievement in sharing.

Exemplarily, the target resource can be booster tickets (i.e., booster admission tickets) of the live streaming room; the information of the target resource can be the information of the booster tickets; the information of the live streaming room can be live streaming content information, live streaming time information, etc. of the live streaming room; respective permissions for the live streaming room can be watching permissions for the live streaming room; and the transfer detail page can be an order detail page. The above steps 201 to 203 are illustrated exemplarily by the following steps 21 to 24. The target resource processing method may include the following steps 21 to 22.

21. Display relevant pages of the live streaming room including a booster ticket transfer identification.

22. In response to a trigger operation on the booster ticket transfer identification, display transfer success information of booster tickets, so as to successfully share the booster tickets, the booster tickets being used to acquire, in the case where the booster tickets are collected, permissions to watch the live streaming room.

Optionally, the booster tickets can be either type-neutral or type-specific. For example, the booster ticket types include a gift-to-friend type and a public booster type. The gift-to-friend type means that the booster tickets shared by the user can only be collected by friends of the user's live streaming application; and the public booster type means that the booster tickets shared by the user can be collected by any other users of the live streaming application.

In an embodiment of the present disclosure, transfer means purchase. The booster ticket transfer identification (i.e., a booster ticket purchase identification) may be a booster ticket transfer control (key or button), a booster ticket transfer icon, or other booster ticket transfer identifications, which is not limited in the embodiment of the present disclosure.

Exemplarily, the booster ticket transfer identification may be a "Buy a Complimentary Ticket" button, an "I also want a Complimentary Ticket" button, or an "Add a Complimentary Ticket" button, etc.

The relevant pages of the live streaming room include the information of the live streaming room, where the information of the live streaming room at least includes the following information: live streaming time information of the live streaming room, and identification information of the live streaming room. The information of the live streaming room may also include ticket price information of the live streaming room, ticket sales period information of the live streaming room, etc., which is not limited in the embodiments of the present disclosure. The identification information of the live streaming room may include name information of the live streaming room, poster information of the live streaming room, etc., which is not limited in the embodiments of the present disclosure.

The relevant pages of the live streaming room may include: a ticket detail page of the live streaming room, a collecting detail page of the booster tickets, or a ticket collecting success pop-up page of the live streaming room, and may also include other pages, which is not limited in the embodiments of the present disclosure.

Exemplarily, the above trigger operation on the booster ticket transfer identification may be to click the "Buy a Complimentary Ticket" button (or "I also want a Complimentary Ticket" button) on the ticket detail page, click the "I also want a Complimentary Ticket" button on the ticket collecting success pop-up page, or click the "Add a Complimentary Ticket" button on the collecting detail page (Friend Tickets & Booster tickets) . In response to the trigger operation, when the tickets of the live streaming room are on sale, a booster ticket is purchased successfully, and transfer success information of the booster ticket is displayed, so as to successfully share the booster ticket, and thus the user who subsequently collects the booster ticket will acquire permissions to watch the live streaming room. It can be understood that, when the tickets of the live streaming room are not for sale, the purchase of a booster ticket fails, and the sharing of the booster ticket fails.

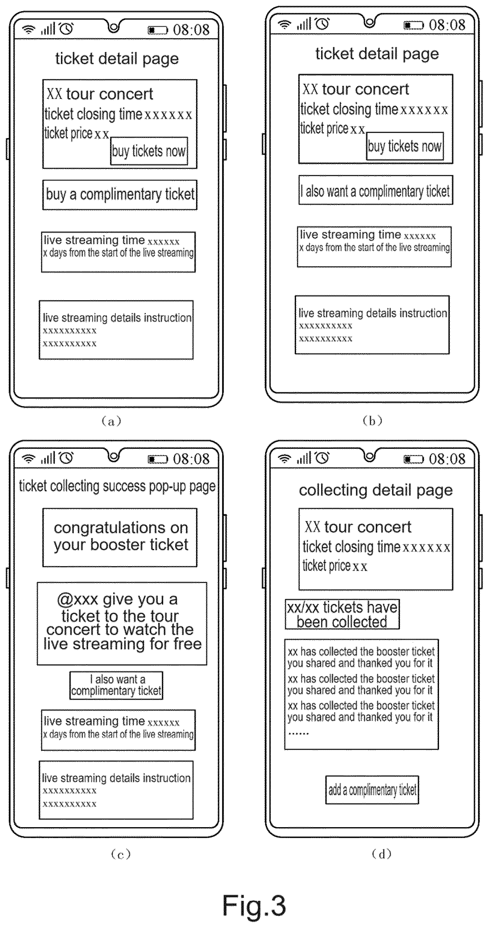

Exemplarily, the ticket detail page can be as shown in (a) in Fig. 3, and can also be as shown in (b) in Fig. 3; the ticket collecting success pop-up page can be as shown in (c) in Fig. 3, and the collecting detail page can be as shown in (d) in Fig. 3.

In the embodiments of the present disclosure, other users can acquire, in a booster ticket sharing manner, permissions to watch a live streaming room by collecting booster tickets in this solution, so that the ways of acquiring live streaming watching permissions are enriched, thereby increasing the amount of transfer of permissions to watch a live streaming room and improving the user experience.

Optionally, in an embodiment of the present disclosure, refunds are available for the booster tickets that have not been collected, including active refunds and automatic refunds after expiration date. However, refunds are unavailable for the booster tickets that have been collected (including active refunds and automatic refunds after expiration date).

In an embodiment of the present disclosure, cancellation of transfer is unavailable for the booster tickets, which can increase the sales of the booster tickets, and facilitates sales statistics since the cancellation of transfer is unavailable.

Optionally, the identification of the user who has collected a booster ticket is visible to the user who shares the booster ticket, and the identification of the user who shares the booster ticket is visible to the user who has collected the booster ticket.

The user who shares a booster ticket is the user who transfers (purchases) the booster ticket.

It can be understood that the user who has collected a booster ticket can determine, according to the identification of the user who shares the booster ticket, from whoever shared the booster ticket has been collected, and the user who shares the booster ticket can determine, according to the user who has collected the booster ticket, who has collected the booster ticket shared thereby. Thus, the user experience can be improved.

Exemplarily, as shown in (c) in Fig. 3, the user who has collected a booster ticket can determine, according to the ticket collecting success pop-up page, from whoever shared the booster ticket has been collected; and as shown in (d) in Fig. 3, the user who shares a booster ticket can determine, from the collecting detail page, who has collected the booster ticket shared thereby.

Optionally, after the above step 21, the resource processing method provided in an embodiment of the present disclosure may also include the following step 23.

23. Display collecting progress information of booster tickets on the first page.

The first page includes any of the following: a live streaming room page of the live streaming room, an order detail page of the booster tickets, a live streaming preview page of the live streaming room, a collecting detail page of the booster tickets, and a sharing success notification message page of the booster tickets.

The collecting progress information at least includes: the number of booster tickets that have been collected and the number of remaining booster tickets that have not been collected. The collecting progress information may also include a collecting time limit of the booster tickets (e.g., a valid time range within which the booster tickets can be collected), information of the live streaming room, etc., which is not limited in the embodiments of the present disclosure.

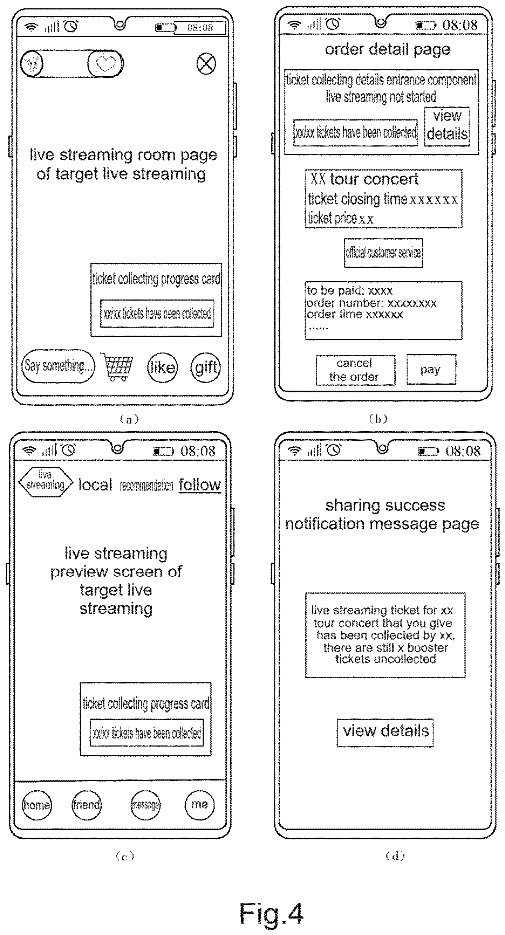

Exemplarily, for example, as shown in (a) in Fig. 4, the live streaming room page of the live streaming room includes a collecting progress card, which includes collecting progress information. As shown in (b) of Fig. 4, the order detail page includes a ticket collecting details entrance component, which includes collecting progress information, and the user can trigger the entry to the collecting detail page by means of a trigger operation on the ticket collecting details entrance component. As shown in (c) in Fig. 4, a preview stream page includes a collecting progress card, which includes collecting progress information. As shown in (d) in Fig. 4, the sharing success notification message page of the booster tickets includes collecting progress information. As shown in (d) in Fig. 3, the collecting detail page includes collecting progress information.

In an embodiment of the present disclosure, by displaying the collecting progress information of a booster ticket on the first page, the user who shares the booster ticket can determine the collecting status of the shared booster ticket according to the collecting progress information, which can improve the user experience and increase the user's sense of accomplishment as a provider.

Optionally, the above step 22 can be specifically implemented through the following steps 22a to 22b.

22a. In response to a trigger operation on the booster ticket transfer identification, display a transfer information page of the live streaming room.

The transfer information page includes relevant rule information of the booster tickets, the transfer quantity of the booster tickets, and resource information required to transfer the booster tickets.

The resource information is price information, which may include unit price information of the booster tickets and total price information of the booster tickets.

The relevant rule information may include purchase rule information (for example, the maximum purchase quantity of the booster tickets, which may be a single maximum purchase quantity or a cumulative maximum purchase quantity), refund rule information, sharing rule information (gift rule information), etc. The details can be determined according to the actual situation, and are not limited in the embodiments of the present disclosure.

Exemplarily, the relevant rule information includes at least one of the following: cancellation of transfer being unavailable to the booster tickets; the booster tickets being able to be collected by other users on a second page that includes the booster ticket collecting identification; and the identification of the user who has collected a booster ticket being visible to the user who shares the booster ticket, and the identification of the user who shares the booster ticket being visible to the user who has collected the booster ticket.

The second page includes at least one of the following: a live streaming room page of the live streaming room, a ticket detail page of the live streaming room, a live streaming preview page of the live streaming room, and a search page for searching the live streaming room.

Optionally, the live streaming room page can currently play a live streaming trial clip, and can also currently display live streaming trial end information; the preview stream page can currently play a live streaming trial clip, and can also currently display live streaming trial end information; and the search page can currently play a live streaming trial clip, and can also currently display live streaming trial end information. The details can be determined according to the actual situation, and are not limited in the embodiments of the present disclosure.

The transfer information page may be a purchase information page of the booster tickets. The transfer information page may be a transfer information setting page (such as a booster ticket selection panel), or may be an order confirmation page of the booster tickets, or may be other pages, which is not limited in the embodiments of the present disclosure.

Optionally, in the case where the transfer information page is a transfer information setting page of the booster tickets, the transfer information page also includes at least one of the following: a setting option for the transfer quantity (i.e., purchase quantity), a type option for the booster tickets, and an upper limit of cumulative transfer of the booster tickets (i.e., a threshold for cumulative purchase of the booster tickets, i.e., the maximum number of cumulative purchase of the booster tickets) . The transfer information page also includes a unit price and a total price of the booster tickets. The total price of the booster tickets is equal to the product of the unit price and the transfer quantity of the booster tickets and the difference with the discount amount. Therefore, as the transfer quantity changes, the total price of the booster tickets changes.

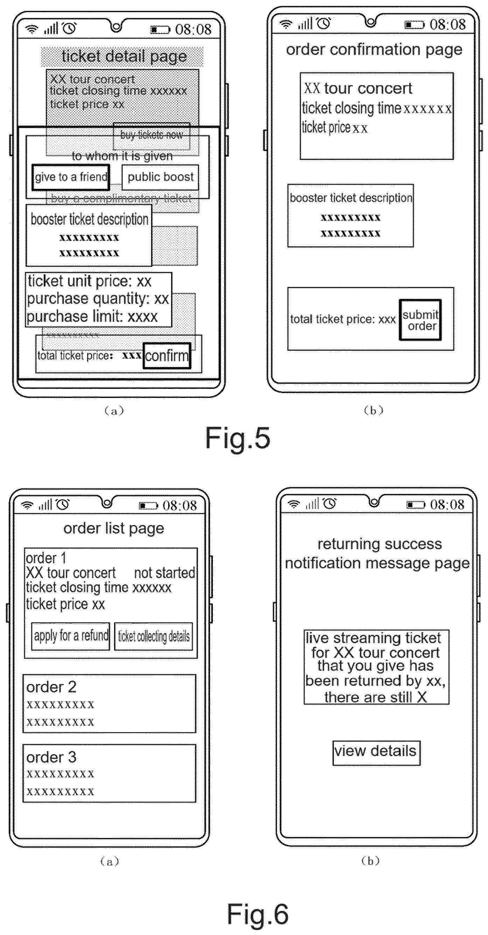

Exemplarily, as shown in (a) in Fig. 5, the transfer information page may be a booster ticket selection panel (which may also be called a complimentary ticket selection panel), and relevant information of the booster tickets can be set by means of the booster ticket selection panel, such as setting the transfer quantity (purchase quantity) of the booster tickets, and setting the type of the booster tickets.

Exemplarily, as shown in (b) in Fig. 5, the transfer information page may be an order confirmation page (i.e., a purchase confirmation page of the booster tickets), and the order confirmation page may also include the information of the live streaming room.

22b. In response to a trigger operation on the transfer information page, display transfer success information of the booster tickets.

In an embodiment of the present disclosure, displaying the transfer information page can facilitate the user to set relevant information of the booster tickets or confirm transfer order information of the booster tickets, which can improve the user experience.

Optionally, after the above step 22, the resource processing method provided in an embodiment of the present disclosure may further include the following step 24.

24. In response to a trigger operation on a ticket collecting details viewing identification in the second page, display a collecting detail page of the booster tickets.

The collecting detail page includes collecting progress information, information of the live streaming room, and identification of the user who has collected a booster ticket.

The second page includes at least one of the following: a live streaming room page of the live streaming room, an order detail page of the booster tickets, an order list page including the booster ticket order, a sharing success notification message page indicating that a booster ticket has been collected, and a return success notification message page indicating that a booster ticket has been returned.

The ticket collecting details viewing identification may be a ticket collecting details viewing control, may also be a ticket collecting details viewing icon, and may also be other identifications . The details can be determined according to the actual situation, and are not limited in the embodiments of the present disclosure.

Exemplarily, the trigger operation on the ticket collecting details viewing identification may be to click a "Ticket Collecting Details" button on the order list page, click a "Ticket Collecting Details" button on the order detail page, click a ticket collecting details entrance component in a header area of the order detail page, click a "View Details" option on the sharing success notification message page, click a "View Details" option on the return success notification message page, or click a "View Collecting Progress" option on the live streaming room page. In response to the trigger operation, the collecting detail page of the boost tickets is displayed.

Exemplarily, the order list page may be as shown in (a) in Fig. 6, the sharing success notification message page may be as shown in (d) in Fig. 4, and the return success notification message page may be as shown in (b) in Fig. 6.

In the embodiments of the present disclosure, various ways of entering the collecting detail page are provided, which can facilitate user operations, facilitate users to view the collecting detail page in a timely manner, and improve the user experience.

Exemplarily, tickets can be purchased by means of a "Buy Tickets" button on the ticket detail page, and the booster ticket selection panel (which can also be called a complimentary ticket selection panel) can be invoked by means of a "Buy Complimentary Tickets" button on the ticket detail page, where the "Buy Complimentary Tickets" button is the booster ticket selection panel entrance. In an embodiment of the present disclosure, the "Buy Tickets" button and the "Buy Complimentary Tickets" button can be displayed simultaneously on the ticket detail page, or the "Buy Tickets" button can be displayed first on the ticket detail page, and the "Buy Complimentary Tickets" button is then displayed on the ticket detail page after a ticket is successfully purchased by means of the "Buy Tickets" button. The details can be determined according to the actual situation, and are not limited in the embodiments of the present disclosure. The booster ticket selection panel includes a booster ticket type (e.g., who to give it to) option, which displays the booster ticket description corresponding to the selected booster ticket type, a ticket price (boost ticket price) of the live streaming room, the purchase quantity of the booster tickets, the total price of the booster tickets, etc.

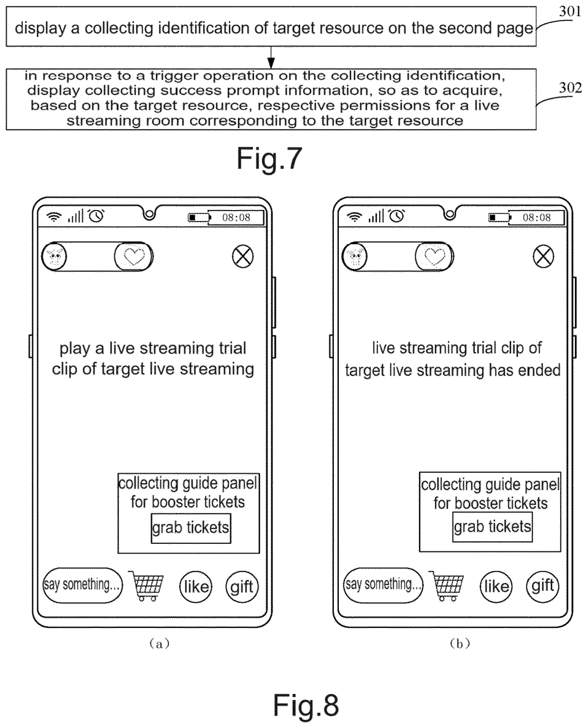

As shown in Fig. 7, an embodiment of the present disclosure provides a resource processing method, which is applied to a target resource collecting object. The target resource collecting object may be the above electronic device, or may be a functional module and/or a functional entity in the above electronic device that can implement the resource processing method. The details can be determined according to the actual situation, and are not limited in the embodiments of the present disclosure. The method may include steps 301 to 302 described below.

301. Display a collecting identification of target resource on the second page.

302. In response to a trigger operation on the collecting identification, display collecting success prompt information, so as to acquire, based on the target resource, respective permissions for a live streaming room corresponding to the target resource.

The second page includes at least one of the following: a live streaming room page of the live streaming room, a resource transfer page of the target resource, a live streaming preview page of the live streaming room, and a search page for searching the live streaming room.

In an embodiment of the present disclosure, respective permissions for a live streaming room can be acquired by collecting target resource shared by other users, thereby enriching the ways of acquiring respective permissions for a live streaming room and improving the user experience.

Optionally, in the case where the second page includes the live streaming room page, the live streaming preview page or the search page, the above step 301 can be specifically implemented by means of the following step 301a.

301a. Display the collecting identification in the case where the playback of a trial clip of the live streaming room on the second page ends.

Optionally, the above step 301a can be specifically implemented by means of the following step 301b.

In an embodiment of the present disclosure, displaying the collecting identification in the case where the playback of a trial clip of the live streaming room ends can effectively guide the user to collect the target resource and acquire respective permissions for the live streaming room corresponding to the target resource, which can improve the user experience.

301b. Display the collecting identification in the case where the playback of a trial clip of the live streaming room on the second page ends and where the target resource collecting object meets a collecting condition.

The collecting condition includes at least one of the following: the target resource collecting object not acquired respective permissions for the live streaming room, the current time being within a collecting time limit of the target resource, and the balance of the target resource being greater than 0.

In an embodiment of the present disclosure, displaying the collecting identification in the case where the playback of a trial clip of the live streaming room ends and where the target resource collecting object meets a collecting condition can effectively guide the user to collect the target resource and acquire respective permissions for the live streaming room corresponding to the target resource, which can improve the user experience.

Exemplarily, the target resource can be booster tickets (i.e., booster admission tickets) of the live streaming room; the information of the target resource can be the information of the booster tickets; the information of the live streaming room can be live streaming content information, live streaming time information, etc. of the live streaming room; respective permissions for the live streaming room can be watching permissions for the live streaming room; the resource transfer page can be a ticket detail page of the live streaming room; and the transfer detail page can be an order detail page. The above steps 301 to 302 are illustrated exemplarily by the following steps 31 to 32. The target resource processing method may include the following steps 31 to 32.

31. Display a collecting identification of booster tickets on the second page.

32. In response to a trigger operation on the collecting identification, display collecting success prompt information, so as to acquire, based on the booster ticket, permissions to watch the live streaming room.

The second page includes at least one of the following: a live streaming room page of the live streaming room, a ticket detail page of the live streaming room, a live streaming preview page of the live streaming room, and a search page for searching the live streaming room.

The collecting identification can be a collecting control or a collecting icon.

A description of the second page can be referred to in the relevant description of the second page in step 24 above and will not be repeated here.

The permissions to watch the live streaming room may include a permission to watch the live streaming content in the live streaming room and a permission to watch the recorded content (e.g., to watch the replay content) in the live streaming room.

In an embodiment of the present disclosure, the permissions to watch the live streaming room can be acquired by collecting the booster tickets shared by other users, thereby enriching the ways of acquiring live streaming watching permissions and improving the user experience.

Optionally, in the case where the second page includes the live streaming room page, the preview stream page or the search page, the above step 31 can be specifically implemented by means of the following step 31a.

31. Display the collecting identification in the case where the playback of a trial clip of the live streaming room on the second page ends.

In an embodiment of the present disclosure, it can be determined whether there is a need to continue watching since the trial clip of the live streaming room has been watched. Therefore, displaying the collecting identification in the case where the playback of a trial clip of the live streaming room ends can effectively guide the user to collect a booster ticket and acquire a permission to continue watching the live streaming room, which can improve the user experience.

Optionally, in an embodiment of the present disclosure, the collecting identification can also be displayed during the playback of the trial clip of the live streaming room. Therefore, when deciding to continue watching the live streaming room, the user can acquire a permission to continue watching the live streaming room in time by means of an operation on the collecting identification, which can improve the user experience.

It can be understood that in the case where the user already has the permissions to watch the live streaming room, after the trial clip of the live streaming room ends, the playback of remaining clips in the live streaming room will be continued directly.

Optionally, the above step 31a can be specifically implemented by means of the following step 31b.

31b. Display the collecting identification in the case where the playback of a trial clip of the live streaming room on the second page ends and where the booster ticket collecting object meets collecting condition.

The collecting condition includes at least one of the following: the booster ticket collecting object having no permission to watch the live streaming room, the current time being within a collecting time limit of the booster tickets, and the balance of the booster tickets being greater than 0.

It can be understood that the collecting identification is displayed in the case where the playback of the trial clip of the live streaming room on the second page ends and where the booster ticket collecting object meets collecting condition; that the collecting identification is not displayed in the case where the playback of the trial clip of the live streaming room on the second page ends and where the booster ticket collecting object does not meet collecting condition; that if the user already has the permissions to watch the live streaming room, the playback of the remaining clips in the live streaming room are continued directly after the playback of the trial clip of the live streaming room ends; and that if the user does not have the permissions to watch the live streaming room, prompt information indicating having no permission to watch the live streaming room can be displayed, or a purchase identification (transfer identification) can be displayed, so that a relevant page of the live streaming room that displays a ticket purchase identification can be triggered by means of a trigger operation on the purchase identification. Thus, the user can purchase tickets by means of the purchase identification to acquire the permissions to watch the live streaming room.

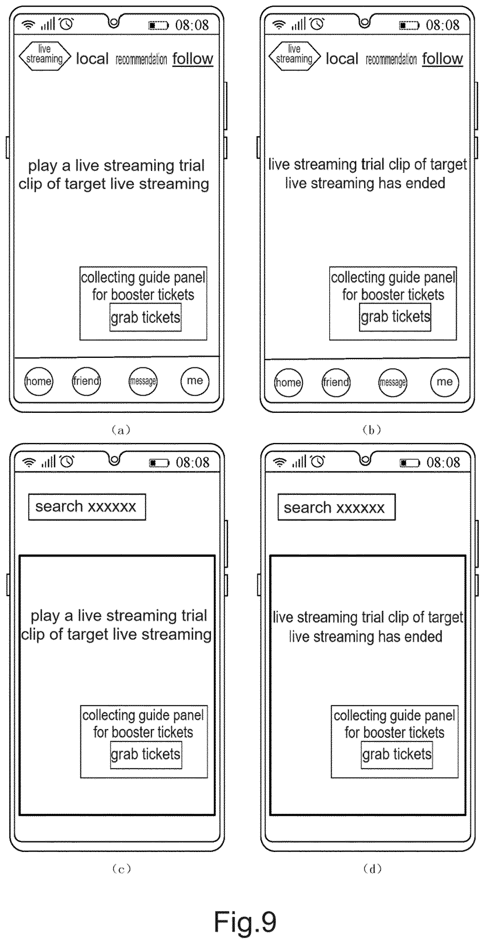

Exemplarily, as shown in (a) in Fig. 8, a booster ticket collecting guide panel is displayed during the playback of the trial clip on the page of the live streaming room, and the booster ticket collecting guide panel includes a "Grab Ticket" button. As shown in (b) in Fig. 8, the booster ticket collecting guide panel is displayed after the playback of the trial clip on the page of the live streaming room ends, and the booster ticket collecting guide panel includes a "Grab Ticket" button. As shown in (a) in Fig. 9, the booster ticket collecting guide panel is displayed during the playback of the trial clip on the preview stream page, and the booster ticket collecting guide panel includes a "Grab Ticket" button. As shown in (b) in Fig. 9, the booster ticket collecting guide panel is displayed after the playback of the trial clip on the preview stream page ends, and the booster ticket collecting guide panel includes a "Grab Ticket" button. As shown in (c) in Fig. 9, the booster ticket collecting guide panel is displayed during the playback of the trial clip on the search page, and the booster ticket collecting guide panel includes a "Grab Ticket" button. As shown in (d) in Fig. 9, the booster ticket collecting guide panel is displayed after the playback of the trial clip on the search page ends, and the booster ticket collecting guide panel includes a "Grab Ticket" button.

In an embodiment of the present disclosure, displaying the collecting identification in the case where the playback of a trial clip of the live streaming room ends and where the booster ticket collecting object meets collecting condition can effectively guide the user to collect a booster ticket to acquire the permissions to watch the live streaming room.

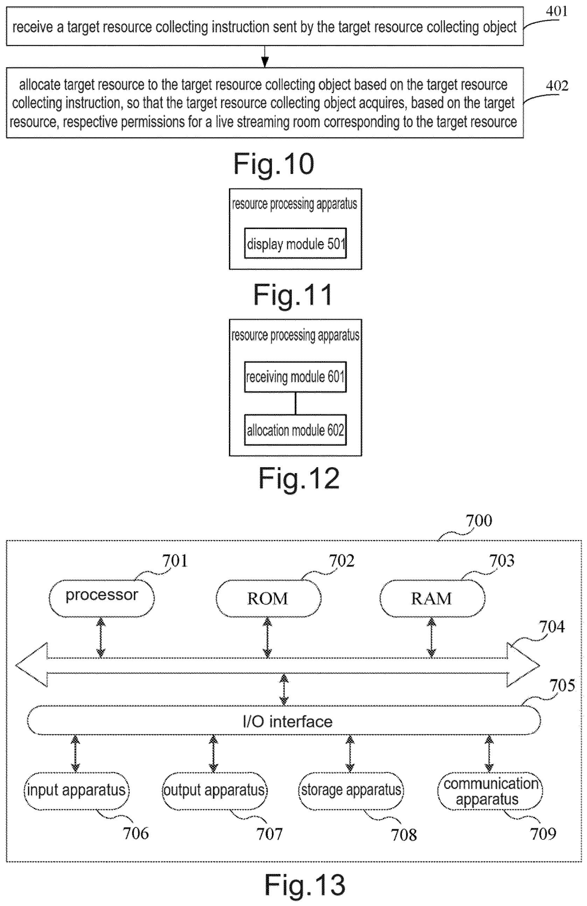

As shown in Fig. 10, an embodiment of the present disclosure provides a resource processing method, which is applied to a target resource allocation platform. The target resource allocation platform may be a server, or may be a functional module and/or a functional entity in the server that can implement the resource processing method. The details can be determined according to the actual needs of use, and are not limited in the embodiments of the present disclosure. The server can consist of at least one computer. The method may include steps 401 to 402 described below.

401. Receive a target resource collecting instruction sent by the target resource collecting object.

402. Allocate target resource to the target resource collecting object based on the target resource collecting instruction, so that the target resource collecting object acquires, based on the target resource, respective permissions for a live streaming room corresponding to the target resource.

In an embodiment of the present disclosure, target resource is allocated to the target resource collecting object so that the target resource collecting object acquires respective permissions for a live streaming room corresponding to the target resource, thereby enriching the ways of acquiring respective permissions for the live streaming room and improving the user experience.

Optionally, the above step 402 can be specifically implemented by means of the following step 402a.

402a. Based on the target resource collecting instruction, allocate target resource to the target resource collecting object in response to collecting condition is met.

The collecting condition includes at least one of the following: the target resource collecting object not acquired respective permissions for the live streaming room, the current time being within a collecting time limit of the target resource, and the balance of the target resource being greater than 0.

In an embodiment of the present disclosure, target resource can be allocated to the target resource collecting object based on the target resource collecting instruction in response to collecting condition is met, which can prevent the situation that target resource is allocated to the target resource collecting object in the case where the target resource collecting object has acquired respective permissions for the live streaming room, resulting in target resource wasting; and can also prevent allocating target resource that are not within the collecting time limit or not exist, and allocating invalid target resource to the target resource collecting object.

Optionally, after the above step 402, a target resource sharing success notification message can be sent to the target resource sharing object, so that the target resource sharing object can learn in a timely manner whether the target resource have been collected.

The target resource sharing object is an object who shares the target resource so that the target resource collecting object can collect the target resource.

Optionally, after the above step 401, based on the target resource collecting instruction, a collecting failure notification message is sent to the target resource collecting object in the case where target resource cannot be allocated to the target resource collecting object, so that the target resource collecting object can learn in a timely manner whether the target resource have been successfully collected.

Optionally, after the above step 402, the resource processing method provided in an embodiment of the present disclosure may also include the following step 403.

403. In the case where a first frequency control condition is met, send a target resource sharing success notification message to a target resource sharing object.

The target resource sharing object is an object who shares the target resource so that the target resource collecting object can collect the target resource.

The first frequency control condition includes at least one of the following: the duration from the current time to the last time when the target resource sharing success notification message is sent to the target resource sharing object being greater than or equal to a first duration threshold; and the cumulative number of times that the target resource sharing success notification messages is sent to the target resource sharing object during the day being less than a first number threshold.

The target resource sharing success notification message includes: all target resource collecting success information for which no target resource sharing success notification message has been sent before the current time.

Optionally, after the above step 402, the resource processing method provided in an embodiment of the present disclosure may also include the following steps 404 to 405.

404. Receive a target resource returning instruction sent by the target resource collecting object.

405. Withdraw, based on the target resource returning instruction, the target resource allocated to the target resource collecting object.

In an embodiment of the present disclosure, respective permissions for the live streaming room of the target resource collecting object can be canceled by withdrawing the target resource allocated to the target resource collecting object, thereby enriching the ways of canceling respective permissions for live streaming and improving the user experience.

Optionally, the above step 405 can be specifically implemented by means of the following step 405a.

405a. In response to returning condition is met, withdraw, based on the target resource returning instruction, the target resource allocated to the target resource collecting object.

The returning condition includes at least one of the following: the target resource collecting object not using respective permissions for the live streaming room by means of the target resource, and the current time being within a collecting time limit of the target resource.

In an embodiment of the present disclosure, respective permissions for the live streaming room of the target resource collecting object can be canceled by withdrawing the target resource allocated to the target resource collecting object in response to returning condition is met, thereby enriching the ways of canceling respective permissions for the live streaming and improving the user experience. Moreover, that the target resource is returned after the target resource collecting object has used the respective permissions for the live streaming room by means of the target resource, and the returned target resource have been invalidated and cannot be collected by other users can be prevented; and that the returned target resource is no longer within the collecting time limit and cannot be collected by other users can also be prevented.

Optionally, a target resource returning success notification message can be sent to the target resource sharing object after the above step 405, so that the target resource sharing object can learn in a timely manner whether the target resource have been returned.

Optionally, after the above step 404, a returning failure notification message is sent to the target resource collecting object based on the target resource returning instruction in the case where the target resource allocated to the target resource collecting object cannot be cancelled, so that the target resource collecting object can learn in a timely manner whether the target resource have been successfully returned.

Optionally, after the above step 405, the resource processing method provided in an embodiment of the present disclosure may further include the following step 406.

406. In response to a second frequency control condition is met, send a target resource returning success notification message to the target resource sharing object.

The second frequency control condition includes at least one of the following: the duration from the current time to the last time when the target resource returning success notification message is sent to the target resource sharing object being greater than or equal to a second duration threshold; and the cumulative number of times that the target resource returning success notification messages is sent to the target resource sharing object during the day being less than a second number threshold.

The target resource returning success notification message includes: all target resource returning information for which no target resource returning success notification message has been sent before the current time.

In an embodiment of the present disclosure, sending the target resource returning success notification message too frequently can be prevented by means of the second frequency control condition, which can improve the user experience.

Exemplarily, the target resource can be booster tickets (i.e., booster admission tickets) of the live streaming room; the information of the target resource can be the information of the booster tickets; the information of the live streaming room can be live streaming content information, live streaming time information, etc. of the live streaming room; respective permissions for the live streaming room can be watching permissions for the live streaming room; the resource transfer page can be a ticket detail page of the live streaming room; and the transfer detail page can be an order detail page. The above steps 401 to 402 are illustrated exemplarily by the following steps 41 to 42. The target resource processing method may include the following steps 41 to 42.

41. Receive a booster ticket collecting instruction sent by the booster ticket collecting object.

42. Allocate booster tickets to the booster ticket collecting object based on the booster ticket collecting instruction in response to collecting condition is met, so that the booster ticket collecting object acquires, based on the booster tickets, permissions to watch the live streaming room.

The collecting condition includes at least one of the following: the booster ticket collecting object having no permission to watch the live streaming room, the current time being within a collecting time limit of the booster tickets, and the balance of the booster tickets being greater than 0.

Optionally, the above step 42 may specifically include allocating booster tickets to the booster ticket collecting object randomly based on the booster ticket collecting instruction in response to collecting condition is met, so that the booster ticket collecting object can acquire, based on the booster tickets, permissions to watch the live streaming room.

It can be understood that the booster ticket collecting object receives a user's trigger operation on a collecting identification and sends the booster ticket collecting instruction to a booster ticket allocation platform. The booster ticket allocation platform receives the booster ticket collecting instruction, and allocates booster tickets to the booster ticket collecting object based on the booster ticket collecting instruction in response to collecting condition is met.

In an embodiment of the present disclosure, the booster ticket allocation platform allocates booster tickets to the booster ticket collecting object based on the received booster ticket collecting instruction sent by the booster ticket collecting object, in response to collecting condition is met, so that the booster ticket collecting object acquires, based on the booster tickets, permissions to watch the live streaming room. In this way, the booster ticket collecting object can acquire permissions to watch the live streaming room by allocating booster tickets to the booster ticket collecting object, thereby enriching the ways of acquiring live streaming watching permissions and improving the user experience.

Optionally, after the above step 42, the resource processing method provided in an embodiment of the present disclosure may also include: sending a booster ticket collecting success notification message to the booster ticket collecting object, and sending a booster ticket sharing success notification message to the booster ticket sharing object, so that the booster ticket collecting object and the booster ticket sharing object can learn, in a timely manner, whether the booster tickets have been successfully collected.

Optionally, after the above step 41, the resource processing method provided in an embodiment of the present disclosure may also include: sending a booster ticket collecting failure notification message to the booster ticket collecting object in response to the collecting condition is not met, so that the booster ticket collecting object can learn, in a timely manner, whether the booster tickets have been successfully collected.

Optionally, after the above step 42, the resource processing method provided in an embodiment of the present disclosure may further include the following step 43.

43. In the case where a first frequency control condition is met, send a booster ticket sharing success notification message to a booster ticket sharing object.

The first frequency control condition includes at least one of the following: the duration from the current time to the last time when the booster ticket sharing success notification message is sent to the booster ticket sharing object being greater than or equal to a first duration threshold; and the cumulative number of times that the booster ticket sharing success notification messages is sent to the booster ticket sharing object during the day being less than a first number threshold.

The booster ticket sharing success notification message includes: all booster ticket collecting success information for which no booster ticket sharing success notification message has been sent before the current time. It can be understood that In the case where a booster ticket collecting success event with no notification message sent before this booster ticket has been successfully collected is included, the booster ticket sharing success notification message includes this booster ticket collecting success information and the previous booster ticket collecting success information with no notification message sent; and In the case where a booster ticket collecting success event with no notification message sent before this booster ticket has been successfully collected is not included, the booster ticket sharing success notification message includes this booster ticket collecting success information.

In an embodiment of the present disclosure, sending the booster ticket sharing success notification message frequently can be prevented by means of the first frequency control condition, which can improve the user experience.

Optionally, the resource processing method provided in an embodiment of the present disclosure may also include the following steps 44 to 45.

44. Receive a booster ticket returning instruction sent by the booster ticket collecting object.

45. In response to returning condition is met, withdraw, based on the booster ticket returning instruction, the booster tickets allocated to the booster ticket collecting object.

The returning condition includes at least one of the following: the booster ticket collecting object not watching the live streaming room by means of the booster tickets (including watching the live streaming content of the live streaming room, and/or watching the replay content of the live streaming room), and the current time being within a collecting time limit of the booster tickets.

In an embodiment of the present disclosure, the booster ticket allocation platform withdraws the booster tickets allocated to the booster ticket collecting object based on the received booster ticket returning instruction sent by the booster ticket collecting object, in response to returning condition is met, so that permissions for the booster ticket collecting object to watch the live streaming room are cancelled, thereby enriching the ways of cancelling live streaming watching permissions and improving the user experience.

Optionally, after the above step 45, the resource processing method provided in an embodiment of the present disclosure may also include: sending a booster ticket returning success notification message to the booster ticket collecting object, and sending the booster ticket returning success notification message to the booster ticket sharing object, so that the booster ticket collecting object and the booster ticket sharing object can learn, in a timely manner, whether the booster tickets have been successfully returned.

Optionally, after the above step 44, the resource processing method provided in an embodiment of the present disclosure may also include: sending a booster ticket returning failure notification message to the booster ticket collecting object in response to the returning condition is not met, so that the booster ticket collecting object can learn, in a timely manner, whether the booster tickets have been successfully returned.

Optionally, after the above step 45, the resource processing method provided in an embodiment of the present disclosure may further include the following step 46.

46. In response to a second frequency control condition is met, send a booster ticket returning success notification message to the booster ticket sharing object.

The second frequency control condition includes at least one of the following: the duration from the current time to the last time when the booster ticket returning success notification message is sent to the booster ticket sharing object being greater than or equal to a second duration threshold; and the cumulative number of times that the booster ticket returning success notification messages is sent to the booster ticket sharing object during the day being less than a second number threshold.

The booster ticket returning success notification message includes: all booster ticket returning information for which no booster ticket returning success notification message has been sent before the current time. It can be understood that In the case where a booster ticket returning success event with no notification message sent before this booster ticket has been successfully returned is included, the booster ticket returning success notification message includes this booster ticket returning success information and the previous booster ticket returning success information with no notification message sent; and In the case where a booster ticket returning success event with no notification message sent before this booster ticket has been successfully returned is included, the booster ticket returning success notification message includes this booster ticket returning success information.

Fig. 11 is a structural block diagram of a resource processing apparatus illustrated in an embodiment of the present disclosure. The resource processing apparatus may be the above electronic device, or may be a functional module and/or a functional entity in the above electronic device that can implement the resource processing method. The details can be determined according to the actual needs of use, and are not limited in the embodiments of the present disclosure.

As shown in Fig. 11, the resource processing apparatus includes: a display module 501; the display module 501 being used to display a resource transfer page of target resource, information of the target resource and information of a live streaming room corresponding to the information of the target resource being displayed on the resource transfer page; and in response to a resource transfer operation on the target resource, display resource transfer success information to share the target resource, the target resource being used to acquire respective permissions for the live streaming room in response to a target resource collecting object collected the target resource.

Optionally, the information of the target resource includes a resource type indicated by a first tag and a resource type indicated by a second tag; the resource transfer operation includes an operation of selecting a target resource type, the target resource type being the resource type indicated by the first tag or the resource type indicated by the second tag; and the type of the target resource collecting object is an object type indicated by the target resource type.

Optionally, the display module 501 is also used to display collecting progress information of the target resource on a first page, where the first page includes any of the following: a live streaming room page of the live streaming room, a transfer detail page of the target resource, a live streaming preview page of the live streaming room, a collecting detail page of the target resource, and a sharing success notification message page of the target resource.

In the embodiments of the present disclosure, each module can implement the resource processing method provided in the above method embodiments, and can achieve the same technical effect. To avoid repetition, details will not be described here.

Fig. 11 is a structural block diagram of a resource processing apparatus illustrated in an embodiment of the present disclosure. The resource processing apparatus may be the above electronic device, or may be a functional module and/or a functional entity in the above electronic device that can implement the resource processing method. The details can be determined according to the actual needs of use, and are not limited in the embodiments of the present disclosure.

As shown in Fig. 11, the resource processing apparatus includes: a display module 501; the display module 501 being used to display a collecting identification of target resource on a second page; and in response to a trigger operation on the collecting identification, display collecting success prompt information, so as to acquire, based on the target resource, respective permissions for a live streaming room corresponding to the target resource, where the second page includes at least one of the following: a live streaming room page of the live streaming room, a resource transfer page of the target resource, a live streaming preview page of the live streaming room, and a search page for searching the live streaming room.

Optionally, in the case where the second page includes the live streaming room page, the live streaming preview page or the search page, the display module 501 is specifically used to display the collecting identification in the case where the playback of a trial clip of the live streaming room on the second page ends.

Optionally, the display module 501 is specifically used to display the collecting identification in the case where the playback of a trial clip of the live streaming room on the second page ends and where the target resource collecting object meets a collecting condition, where the collecting condition includes at least one of the following: the target resource collecting object not acquired respective permissions for the live streaming room, the current time being within a collecting time limit of the target resource, and the balance of the target resource being greater than 0.

In the embodiments of the present disclosure, each module can implement the resource processing method provided in the above method embodiments, and can achieve the same technical effect. To avoid repetition, details will not be described here.

Fig. 12 is a structural block diagram of a resource processing apparatus illustrated in an embodiment of the present disclosure. The resource processing apparatus may be the above electronic device, or may be a functional module and/or a functional entity in the above electronic device that can implement the resource processing method. The details can be determined according to the actual needs of use, and are not limited in the embodiments of the present disclosure.

As shown in Fig. 12, the resource processing apparatus includes: a receiving module 601 and an allocation module 602; the receiving module 601 being used to receive a target resource collecting instruction sent by a target resource collecting object; the allocation module 602 being used to allocate target resource to the target resource collecting object based on the target resource collecting instruction received by the receiving module 601, so that the target resource collecting object acquires, based on the target resource, respective permissions for a live streaming room corresponding to the target resource.

Optionally, the allocation module 602 is specifically used to, based on the target resource collecting instruction received by the receiving module 601, allocate target resource to the target resource collecting object in response to collecting condition is met, where the collecting condition includes at least one of the following: the target resource collecting object not acquired respective permissions for the live streaming room, the current time being within a collecting time limit of the target resource, and the balance of the target resource being greater than 0.

Optionally, the resource processing apparatus also includes: a sending module; the sending module being used to, In the case where a first frequency control condition is met, send a target resource sharing success notification message to a target resource sharing object based on the target resource collecting instruction after allocating the target resource to the target resource collecting object, the target resource sharing object being an object who shares the target resource so that the target resource collecting object can collect the target resource; the first frequency control condition including at least one of the following: the duration from the current time to the last time when the target resource sharing success notification message is sent to the target resource sharing object being greater than or equal to a first duration threshold, and the cumulative number of times that the target resource sharing success notification messages is sent to the target resource sharing object during the day being less than a first number threshold; the target resource sharing success notification message including: all target resource collecting success information for which no target resource sharing success notification message has been sent before the current time.

Optionally, the resource processing apparatus also includes: a withdrawal module; the receiving module 601 being also used to receive a target resource returning instruction sent by the target resource collecting object; the withdrawal module being used to, in response to returning condition is met, withdraw, based on the target resource returning instruction received by the receiving module 601, the target resource allocated to the target resource collecting object, where the returning condition includes at least one of the following: the target resource collecting object not using respective permissions for the live streaming room by means of the target resource, and the current time being within a collecting time limit of the target resource.

Optionally, the sending module is also used to, in response to a second frequency control condition is met, send a target resource returning success notification message to the target resource sharing object after the target resource allocated to the target resource collecting object are withdrawn based on the target resource returning instruction in response to returning condition is met; the second frequency control condition including at least one of the following: the duration from the current time to the last time when the target resource returning success notification message is sent to the target resource sharing object being greater than or equal to a second duration threshold, and the cumulative number of times that the target resource returning success notification messages is sent to the target resource sharing object during the day being less than a second number threshold; the target resource returning success notification message including: all target resource returning information for which no target resource returning success notification message has been sent before the current time.

In the embodiments of the present disclosure, each module can implement the resource processing method provided in the above method embodiments, and can achieve the same technical effect. To avoid repetition, details will not be described here.

Compared with the prior art, the technical solutions provided in the embodiments of the present disclosure have the following advantages: in the embodiments of the present disclosure, by displaying a resource transfer page of target resource, information of the target resource and information of a live streaming room corresponding to the information of the target resource being displayed on the resource transfer page; and in response to a resource transfer operation on the target resource, displaying resource transfer success information to share the target resource, the target resource being used to acquire respective permissions for the live streaming room in response to a target resource collecting object collected the target resource, the target resource collecting object can acquire, in a target resource sharing manner, respective permissions for the live streaming room by collecting the target resource in this solution, so that the ways of acquiring respective permissions for a live streaming room are enriched, thereby improving the user experience and increasing the amount of transfer of respective permissions for a live streaming room.

Fig. 13 is a schematic structural diagram of an electronic device provided in an embodiment of the present disclosure, which is used to illustrate an electronic device that implements any resource processing method in the embodiments of the present disclosure, and should not be understood as a specific limitation of the embodiments of the present disclosure.

As shown in Fig. 13, the electronic device 700 may include a processor (e.g., a central processing unit, a graphics processor, etc.) 701, which may perform various appropriate actions and processes according to programs stored in a read-only memory (ROM) 702 or programs loaded from a storage apparatus 708 into a random access memory (RAM) 703. Various programs and data required for the operation of the electronic device 700 are also stored in the RAM 703. The processor 701, ROM 702 and RAM 703 are connected to each other via a bus 704. An input/output (I/O) interface 705 is also connected to the bus 704.

Generally, the following apparatuses may be connected to the I/O interface 705: an input apparatus 706 including, for example, a touch screen, a touch pad, a keyboard, a mouse, a camera, a microphone, an accelerometer, a gyroscope, etc.; an output apparatus 707 including, for example, a liquid crystal display (LCD), a speaker, a vibrator, etc. ; a storage apparatus 708 including, for example, a magnetic tape, a hard disk, etc.; and a communication apparatus 709. The communication apparatus 709 may allow wireless or wired communication between the electronic device 700 and other devices, so as to exchange data. Although the electronic device 700 with various apparatuses is illustrated, it should be understood that implementation or availability of all illustrated apparatuses is not required. More or fewer apparatuses may alternatively be implemented or provided.

In particular, according to the embodiments of the present disclosure, the processes described above with reference to the flowcharts may be implemented as computer software programs. For example, the embodiments of the present disclosure include a computer program product, which includes a computer program carried on a non-transitory computer-readable medium, the computer program containing program code for executing the method shown in the flowcharts. In such embodiments, the computer program may be downloaded and installed from the network by means of the communication apparatus 709, or installed from the storage apparatus 708, or installed from the ROM 702. When the computer program is executed by the processor 701, the functions defined in any resource processing method provided in the embodiments of the present disclosure can be performed.

It should be noted that the computer-readable medium mentioned above in the present disclosure may be a computer-readable signal medium or a computer-readable storage medium, or any combination of the above two. A computer-readable storage medium may be, for example, but is not limited to, an electrical, magnetic, optical, electromagnetic, infrared, or semiconductor system, apparatus or device, or any combination of the above. More specific examples of a computer-readable storage medium may include, but are not limited to: an electrical connection having one or more wires, a portable computer disk, a hard drive, a random access memory (RAM), a read-only memory (ROM), an erasable programmable read-only memory (EPROM or flash memory), fiber optics, a portable compact disk read-only memory (CD-ROM), an optical storage device, a magnetic storage device, or any suitable combination of the above. In the present disclosure, a computer-readable storage medium may be any tangible medium that contains or stores a program for use by or in combination with an instruction execution system, apparatus, or device. Moreover, in the present disclosure, a computer-readable signal medium may include a data signal propagated in a baseband or as part of a carrier wave, carrying computer-readable program code therein. Such propagated data signals may take many forms, including but not limited to electromagnetic signals, optical signals, or any suitable combination of the above. A computer-readable signal medium may also be any computer-readable medium other than the computer-readable storage medium, and can send, propagate, or transmit a program for use by or in combination with an instruction execution system, apparatus, or device. Program code embodied on a computer-readable medium may be transmitted using any suitable medium, including but not limited to: a wire, an optical cable, RF (radio frequency), etc., or any suitable combination of the above.

In some implementations, a client and a server can communicate using any currently known or future developed network protocol such as HTTP (HyperText Transfer Protocol), and can interconnect with digital data communication (e.g., a communications network) in any form or medium. Examples of communication networks include local area networks ("LAN"), wide area networks ("WAN"), networks of network (e.g., the Internet), and end-to-end networks (e.g., ad hoc end-to-end networks), as well as any currently known or future developed networks.

The above computer-readable medium may be contained in the above electronic device, or may also exist independently without being assembled into the electronic device.

The above computer-readable medium carries one or more programs. When the above one or more programs are executed by the electronic device, the electronic device is caused to: display a resource transfer page of target resource, information of the target resource and information of a live streaming room corresponding to the information of the target resource being displayed on the resource transfer page; and in response to a resource transfer operation for the target resource, display resource transfer success information to share the target resource, the target resource being used to acquire respective permissions for the live streaming room in response to a target resource collecting object collected the target resource.

Alternatively, the above computer-readable medium carries one or more programs. When the above one or more programs are executed by the electronic device, the electronic device is caused to: display a collecting identification of target resource on a second page; and in response to a trigger operation on the collecting identification, display collecting success prompt information, so as to acquire, based on the target resource, respective permissions for a live streaming room corresponding to the target resource, where the second page includes at least one of the following: a live streaming room page of the live streaming room, a resource transfer page of the target resource, a live streaming preview page of the live streaming room, and a search page for searching the live streaming room.

Alternatively, the above computer-readable medium carries one or more programs. When the above one or more programs are executed by the electronic device, the electronic device is caused to: receive a target resource collecting instruction sent by a target resource collecting object; and allocate target resource to the target resource collecting object based on the target resource collecting instruction, so that the target resource collecting object acquires, based on the target resource, respective permissions for a live streaming room corresponding to the target resource.

In the embodiments of the present disclosure, computer program code for performing the operations of the present disclosure may be written in one or more programming languages, or combinations thereof, including, but not limited to, object-oriented programming languages such as Java, Smalltalk, C++, and conventional procedural programming languages such as "C" or similar programming languages. The program code may execute entirely on a computer, partly on the computer, as a stand-alone software package, partly on the computer and partly on a remote computer, or entirely on the remote computer or server. In situations involving remote computers, the remote computers can be connected to computers via any kind of network, including a local area network (LAN) or a wide area network (WAN), or can be connected to external computers (e.g., by using an Internet service provider to connect via the Internet).

The flowcharts and block diagrams in the figures illustrate the architecture, functionality and operations of possible implementations of the system, method, and computer program product according to various embodiments of the present disclosure. In this regard, each block in the flowcharts or block diagrams may represent a module, segment, or portion of code that contains one or more executable instructions that implement specified logic functions. It should also be noted that, in some alternative implementations, the functions noted in the blocks may also occur out of the order noted in the figures. For example, two blocks shown one after another may actually execute substantially in parallel, or may sometimes execute in the reverse order, depending on the functionality involved. It will also be noted that each block of the block diagrams and/or flowcharts, and combinations of blocks in the block diagrams and/or flowcharts can be implemented by dedicated hardware-based systems that perform the specified functions or operations, or can be implemented using a combination of dedicated hardware and computer instructions.

The involved units described in the embodiments of the present disclosure can be implemented in software or hardware. The name of a unit does not constitute a limitation on the unit itself under certain circumstances.

The functions described above herein may be performed, at least in part, by one or more hardware logic components. For example, and without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. Machine-readable media may include, but are not limited to, electronic, magnetic, optical, electromagnetic, infrared, or semiconductor systems, apparatuses or devices, or any suitable combination of the above. More specific examples of a machine-readable storage medium would include an electrical connection based on one or more wires, a portable computer disk, a hard drive, a random access memory (RAM), a read-only memory (ROM), an erasable programmable read-only memory (EPROM or flash memory), fiber optics, a portable compact disk read-only memory (CD-ROM), an optical storage device, a magnetic storage device, or any suitable combination of the above.

The above descriptions are only preferred embodiments of the present disclosure and an illustration of the technical principles applied. Those skilled in the art should understand that the scope of disclosure involved in the present disclosure is not limited to technical solutions formed by particular combinations of the above technical features, but should also cover other technical solutions formed by any combination of the above technical features or their equivalent features without departing from the above disclosed concept, for example, a technical solution formed by replacing the above features with technical features with similar functions disclosed (but not limited to) in the present disclosure.

Furthermore, although various operations are depicted in a specific order, this should not be understood as requiring that these operations be performed in the specific order shown or performed in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments can also be implemented in combination in a single embodiment. Conversely, various features that are described in the context of a single embodiment can also be implemented in a plurality of embodiments separately or in any suitable sub-combination.

Although the present subject matter has been described in language specific to structural features and/or methodological acts, it should be understood that the subj ect matter defined in the appended claims is not necessarily limited to the specific features or acts described above. Rather, the specific features and acts described above are merely example forms of implementing the claims.

## Claims

1. A resource processing method, comprising:
displaying a resource transfer page of target resource, information of the target resource and information of a live streaming room corresponding to the information of the target resource being displayed on the resource transfer page; and
in response to a resource transfer operation on the target resource, displaying resource transfer success information to share the target resource, the target resource being configured to acquire respective permissions for the live streaming room in response to a target resource collecting object collected the target resource.

2. The method according to claim 1, wherein the information of the target resource comprises a resource type indicated by a first tag and a resource type indicated by a second tag; the resource transfer operation comprises an operation of selecting a target resource type, the target resource type is the resource type indicated by the first tag or the resource type indicated by the second tag; and the type of the target resource collecting object is an object type indicated by the target resource type.

3. The method according to claim 1, further comprising:
displaying collecting progress information of the target resource on a first page;
wherein the first page comprises any one of the following: a live streaming room page of the live streaming room, a transfer detail page of the target resource, a live streaming preview page of the live streaming room, a collecting detail page of the target resource, and a sharing success notification message page of the target resource.

4. A resource processing method, comprising:
displaying a collecting identification of target resource on a second page; and
in response to a trigger operation on the collecting identification, displaying collecting success prompt information, so as to acquire, based on the target resource, respective permissions for a live streaming room corresponding to the target resource;
wherein the second page comprises at least one of the following: a live streaming room page of the live streaming room, a resource transfer page of the target resource, a live streaming preview page of the live streaming room, and a search page for searching the live streaming room.

5. The method according to claim 4, wherein in response to the second page comprises the live streaming room page, the live streaming preview page or the search page, the displaying a collecting identification of target resource on a second page comprises:
displaying the collecting identification in response to a playback of a trial clip of the live streaming room on the second page ends.

6. The method according to claim 4, wherein the displaying the collecting identification in response to a playback of a trial clip of the live streaming room on the second page ends comprises:
displaying the collecting identification in response to a playback of a trial clip of the live streaming room on the second page ends and a target resource collecting object meets a collecting condition;
wherein the collecting condition comprises at least one of the following:
the target resource collecting object not acquired respective permissions for the live streaming room, the current time being within a collecting time limit of the target resource, and the balance of the target resource being greater than 0.

7. A resource processing method, comprising:
receiving a target resource collecting instruction sent by a target resource collecting object; and
allocating target resource to the target resource collecting object based on the target resource collecting instruction, so that the target resource collecting object acquires, based on the target resource, respective permissions for a live streaming room corresponding to the target resource.

8. The method according to claim 7, wherein the allocating target resource to the target resource collecting object based on the target resource collecting instruction comprises:
based on the target resource collecting instruction, in response to a collecting condition is met, allocating target resource to the target resource collecting object;
wherein the collecting condition comprises at least one of the following:
the target resource collecting object not acquired respective permissions for the live streaming room, the current time being within a collecting time limit of the target resource, and the balance of the target resource being greater than 0.

9. The method according to claim 7, wherein after allocating target resource to the target resource collecting object based on the target resource collecting instruction, the method further comprises:
in response to a first frequency control condition is met, sending a target resource sharing success notification message to a target resource sharing object, the target resource sharing object being an object who shares the target resource so that the target resource collecting object can collect the target resource;
the first frequency control condition comprises at least one of the following:
a duration from the current time to the last time when the target resource sharing success notification message is sent to the target resource sharing object being greater than or equal to a first duration threshold; and
a cumulative number of times that the target resource sharing success notification messages is sent to the target resource sharing object during the day being less than a first number threshold;
the target resource sharing success notification message comprises: all target resource collecting success information for which no target resource sharing success notification message has been sent before the current time.

10. The method according to claim 7, further comprising:
receiving a target resource returning instruction sent by the target resource collecting object; and
based on the target resource returning instruction, in response to returning condition is met, withdrawing the target resource allocated to the target resource collecting object;
wherein the returning condition comprises at least one of the following:
the target resource collecting object not used respective permissions for the live streaming room by means of the target resource, and the current time being within a collecting time limit of the target resource.

11. The method according to claim 10, wherein after based on the target resource returning instruction, in response to returning condition is met, withdrawing the target resource allocated to the target resource collecting object, the method further comprises:
in response to a second frequency control condition is met, sending a target resource returning success notification message to the target resource sharing object;
the second frequency control condition comprises at least one of the following:
a duration from the current time to the last time when the target resource returning success notification message is sent to the target resource sharing object being greater than or equal to a second duration threshold; and
a cumulative number of times that the target resource returning success notification messages is sent to the target resource sharing object during the day being less than a second number threshold;
the target resource returning success notification message comprises: all target resource returning information for which no target resource returning success notification message has been sent before the current time.

12. A resource processing apparatus, comprising: a display module, which is configured to display a resource transfer page of target resource, information of the target resource and information of a live streaming room corresponding to the information of the target resource being displayed on the resource transfer page; and in response to a resource transfer operation on the target resource, display resource transfer success information to share the target resource, the target resource being configured to acquire respective permissions for the live streaming room in response to a target resource collecting object collected the target resource.

13. A resource processing apparatus, comprising:
a display module, which is configured to display a collecting identification of target resource on a second page; and
in response to a trigger operation on the collecting identification, display collecting success prompt information, so as to acquire, based on the target resource, respective permissions for a live streaming room corresponding to the target resource;
wherein the second page comprises at least one of the following: a live streaming room page of the live streaming room, a resource transfer page of the target resource, a live streaming preview page of the live streaming room, and a search page for searching the live streaming room.

14. A resource processing apparatus, comprising:
a receiving module, which is configured to receive a target resource collecting instruction sent by a target resource collecting object; and
an allocation module, which is configured to allocate target resource to the target resource collecting object based on the target resource collecting instruction received by the receiving module, so that the target resource collecting object acquires, based on the target resource, respective permissions for a live streaming room corresponding to the target resource.

15. An electronic device, comprising: a memory and a processor, the memory being configured to store a computer program; the processor being configured to execute the resource processing method as claimed in any one of claims 1 to 11 when the computer program is called.

16. A computer-readable storage medium storing a computer program thereon, the computer program, when executed by a processor, implementing the resource processing method as claimed in any one of claims 1 to 11.

17. A computer program product, a computer program being stored on the computer-readable storage medium, the computer program, when executed by a processor, implementing the resource processing method as claimed in any one of claims 1 to 11.
